# EUROPEAN PATENT APPLICATION

(11) **EP 2 381 396 A1**
(43) Date of publication of application: **26.10.2011**
(21) Application number: 10160394.2
(22) Date of filing: 20.04.2010
(51) Int. Cl.: G06Q 10/00

(54) **Delivery system for objects**

(71) Applicant: Deutsche Post AG, 53113 Bonn (DE)
(72) Inventor: Parjanne, Erno Hannes, FI-01520 Vantaa (FI)
(74) Representative: Jostarndt, Hans-Dieter

(57) **Abstract**

The invention relates to a delivery system delivering objects (1) to customers comprising a notification system (2) to notify the customer about a delivery time of the object (1) with a database (21) comprising contact information about the customer, a notification label (3) with machine-readable information attached to the object (1) to link the object (1) to the contact information of the customer present in the database (21), wherein the notification system (2) further comprises portable reading units (5) suitable to read (R) the machine-readable information of the notification label (3) and to be connected to the database (21) of the notification system (2) wireless (W), where the reading (R) of the machine-readable information provides a trigger to the notification system (2) to send out (S) a notification (22) to the customer about the delivery time of the object (1) within a range of less than 6 hours, preferably less than 3 hours, more preferred less than 2 hours, even more preferred 1 hour or less. The invention further relates to a portable reading unit (5) for use in a delivery system and to a method to operate the delivery system.

## Description

### Field of the invention

The invention relates to a delivery system delivering objects to customers comprising a notification system to notify the customer about a delivery time of the object, a portable reading unit used in the system and to a method operating the delivery system.

### Background of the invention

Delivery services deliver mail pieces, parcel or objects directly from the sender or a logistic terminal to the customer (or recipient). Commonly the customer is generally informed about the delivery of a mail piece, parcel or object in advance. In many cases the customer gets a tracking number from the shipping company and also an estimate when to expect the delivery. However, such information is given only on an accuracy of day level. For getting more accurate delivery times the customer (recipient) has to contact the delivery service directly. This requires customers action on own motion, which are normally not done. The delivery date on day level often leads to the situation that the customer is not available at the customers address at the particular time of delivery. Commonly the delivery service leaves a message at the customers address requesting the customer either to contact the delivery service or to pick up his parcel, mail piece or object at a certain service station, e.g. a local post office. The same situation may occur in case of a second delivery attempt is made. Eventually a second attempt to deliver is made only on request of the customer. Double deliveries imply an increase effort for the delivery service to execute the delivery of the mail piece, parcel or object. The time delay for delivery may result in non-satisfied customers (recipient) and additional costs for temporary storing the mail piece, parcel or object before finally delivering it.

Document US 2006/0085273 provides a method and a system for transmitting notifications to users of a logistic system, e.g. by e-mail or by SMS. The notifications are sent on the basis of events that have occurred within the logistic system, where the user is notified that a parcel has been deposited for him or a user has picked up his parcel at the deposition site. These messages do not predict any delivery times, but only report about the status of a parcel somewhere within the logistic chain. For example, the system shall also be used to send reminders notifications after 2 days or 7 days. The customer service is nevertheless minor, because the customer has to pick up the object instead of being delivered at his address. Furthermore, the notifications are sent out for any parcel and any status change. In view of the huge amount of worldwide transported parcels, especially a commercial customer receiving a large number of parcels regularly is flooded with a huge amount of notifications being of no interest for him leading to a big effort to read and react on the notifications.

### Summary of the invention

It is an object of the present invention to provide a delivery system and a corresponding method to operate such a system reducing the amount of objects not delivered to the customer at the first attempt and providing convenient service to the customer.

The object is solved by a delivery system delivering objects to customers comprising a notification system to notify the customer about a delivery time of the object with a database comprising contact information about the customer, a notification label with machine-readable information attached to the object to link the object to the contact information of the customer present in the database, wherein the notification system further comprises portable reading units suitable to read the machine-readable information of the notification label and to be connected to the database of the notification system wireless, where the reading of the machine-readable information provides a trigger to the notification system to send out a notification to the customer about the delivery time of the object within a range of less than 6 hours, preferably less than 3 hours, more preferred less than 2 hours, even more preferred 1 hour or less.

The term delivery system comprises all systems or companies delivering objects to customers such as courier services, logistic companies or mailing companies. The term "delivering to customers" denotes the delivery of objects to the customers address in contrast to systems only notifying the customer, where he as the recipient can pick up an object from a logistic terminal or mailing office. Objects can be any kind of delivered items, e.g. mail pieces, parcels, shipped devices or any other kind of objects. The term "to notify the customer about a delivery time" denotes any transmission of information (=notification) to the customer about the delivery time. This term is not limited to the transmission technique, which could be any suitable technique to inform the customer, e.g. contacting the customer via telephone or via the internet. The delivery time denotes the time, when the object is present at the customers address or the delivery address for the customer. The objects might be delivered to the mailing address of the customer or to any other address as requested by the customer. However, the notification shall make sure that the customer (or a representative of the customer) is present at the notified delivery time to receive the object at the first attempt. Therefore the customer or the sender has to provide contact information of the customer to the delivery system, which is stored in the database of the notification system. The contact information may comprise one or more telephone numbers, cell phone number, e-mail-addresses or websites, which are suitable to contact the customer directly and which are commonly used by the customer to contact him with the highest probability. The customer may assign the contact information with one or more delivery addresses, or certain delivery addresses with certain contact information as well as his preference for the desired delivery address and the corresponding desired delivery time. During the route preparations of the delivery service to deliver the objects, the preferences might be incorporated in the route planning of the courier service delivering the objects to the customers address. The contact information might be provided by the customer itself or by a shipper involved in the delivery of the object having formally obtained the contact information from the customer or the sender. As an example, the delivery system can make it mandatory for the customer or the sender to insert contact information of the customer (telephone number etc.) in case of delivery services using an electronic booking tool (ECOM) to dispatch an object. The amount of delivered objects at first attempt will increase in case of present customer information. Therefore it is beneficial to collect the required customer information as soon as possible, preferably when dispatching the object.

The notification label is a label of any kind attached at a suitable location to the outside of the object directly or to the wrapping of the object, e.g. beside the mailing label on a mailing envelope, which are both denoted as "attached to the object" in the following. The label might be attached to the object with an adhesive surface or glued on top of the object. Alternatively, the notification label might be printed on top of the object in case of suitable objects or wrapping of objects. The notification label might be attached to the object, when the sender dispatches or posts the object or when the sender hands over the object to a delivery system. In case of to-be-transported objects not carrying such a notification label, the notification label might be attached to the object later in the logistic chain transporting the object from the sender to the customer (recipient). Especially in case of worldwide transports, the object might be dispatched in a country having no access to notification labels and/or notification systems and/or having no contact information. Subsequently an notification label will not be attached to such objects in the first phase of the transport. The notification label has to be attached to the object at latest before finally delivering the object to the customer in his home country or home town or home logistic center. It is therefore advantageous, if objects carrying no notification labels could be recognized easily at the logistic terminal having access to the notification system and are able to apply notification labels to the object. In an embodiment, the notification labels might be colored in an eye-catching color or might be placed at a location, where operators and/or scanners can easily recognize the presence or the absence of such a notification label. The logistic terminal might sort out objects not carrying notification labels for applying the notification labels separately offline or notification labels are applied to the objects manually or automatically during the normal process flow of handling the objects. In an embodiment the notification label is part of a mailing label, which results in a one-step process of applying the required information, e.g. together with the franking, to finally deliver the objects with the mailing label and applying the notification label in order to link the object to the notification system. In order to link the object to the contact information of the customer present in the database of the notification system in a time-saving, effective and secure way, the notification label comprises machine-readable information to establish such a link. In an embodiment the machine-readable information is a one or two dimensional barcode or provided by an RFID chip. Such machine-readable information is common and suitable devices able to read such information are available. This machine readable information can be read contactless resulting in a fast handling of the objects. As an example, suitable reading units are common bar code scanner or RFID receiver.

To be able to send-out notifications with securely predicted delivery times, it is advantageous to send-out the notification in a later phase of the delivery process, e.g. on the same day of the delivery or the day before the delivery day. The reading of the notification label is used as a trigger for sending out the notification to the customer. The term "trigger" denotes the internal signal to generate and send-out the notification by the notification system. The sending unit inside the notification system can be placed anywhere, since notifications can be send-out worldwide, e.g. as SMS (short message service to transfer text messages), telephone call, e-mail, or electronic calendar information (iCalendar). The notification might be send out to one or all contact addresses present in the contact information.

To be able to link the notification label from any suitable location to the notification system sending out the notification, the reading unit should be portable and connected to the database comprising the contact information required to send out the notification to the customer with a wireless connection in order to obtain the highest flexibility of the system and the best predictability of the delivery time. As an example, the objects with notification labels might be scanned during the route preparation of a courier service for delivering the objects on the same day. The notification labels can be scanned during loading the objects into the transport vehicle of the courier service. Here the easiest way to establish a connection to the notification system would be to use a wireless connection. In an embodiment the wireless connection between the portable reading unit and the database is established by applying at least one element of the group comprising WLAN, RFID, radio communication, or cellular communication network. The wireless connection might be established directly between the reading unit and the notification system comprising the database or between the reading unit and a transmitting station connected to the notification system and/or the database. Such a transmitting station could be present in the transport vehicle of the courier service delivery the object to the customer. The transmitting station could use any suitable wireless technique to establish this connection. Together with a nearby located transmitting station, the reading unit can use wireless technologies applicable for a limited range of operation. Alternatively, the transmitting station can be located at the location, where the transport vehicle is loaded with objects.

Since the notification is send out at a late phase of the delivery process, it is possible to reliable predict a delivery time within a time range of less than 6 hours, preferably less than 3 hours, more preferred less than 2 hours, even more preferred 1 hour or less. The notification shall not be sent out to close to the announced delivery time to give the customer enough time to be present at the delivery address, preferably 2, 3, 4, 6, 12, or 24 hours before the announced delivery time. To be able to send-out notifications with securely predicted delivery times, it is advantageous to send-out the notification in a later phase of the delivery process, e.g. on the same day of the delivery or the day before the delivery day, preferably not earlier than 36 or 48 hours before delivering the object. The delivery time announced in the notification preferably is given as a range of time (time interval) of 6, 3, 2, or 1 hour, where the target delivery time is in the middle of the time interval, e.g. in a zip level format. The delivery time is may be calculated from the address information of the multiple objects to be delivered to multiple customers on a certain day and a corresponding route planning program. Such programs may be conventional route planning programs, e.g. as being available in the internet today, inserting the customer addresses as address points to be subsequently passed by the route to be followed from the transport vehicle of the delivery service. The arrival times at the address points provided by the route planning program can be used as delivery time, where the announced range of the delivery time is added in accordance to the estimated traffic situation on the delivery day. The resulting accurate announced delivery time will result in an increased amount of objects delivered to the customers at the first attempt, because the customers have sufficient time to arrange their presence at the delivery address. These route planning programs may be executed from a suitable component of the notification system and provide delivery data for creating the content of the notification. Subsequently the average effort to deliver an object is strongly decreased for the delivery service, e.g. the courier service. Furthermore the satisfaction of the customer is increased, because the customer has to wait for the delivery only a short time period of one or a few hours in contrast to prior art system only predicting the delivery day with unknown delivery time within a 24 hours period of the day. The customer further avoids time consuming actions to pick-up the object from a logistic service station in case of failed delivery due to his absence.

The notification may further comprise an AWB number, which refers to a receipt issued by an international delivery service or courier company for delivering objects and to an evidence of the contract of carriage. The AWB has a tracking number, which can be used to check the status of delivery and current position of the shipment. The notification may also comprise sender data or customer data such as customer address to provide a further check for the customer receiving the notification, that the notification is indeed for him. Preferably, the notification further comprises contact information about the delivery service, where the customer may propose any other delivery time in case of inconvenience of the originally announced delivery time. In another embodiment the notification system is suitable to receive a reply of the customer to the notification about the delivery time, preferably to update the delivery time, or to receive a proposal of at least one suitable delivery time made by the customer before sending out the notification. The delivery at a delivery time proposed by the customer will further increase the probability to deliver the object to the customer at the first attempt and subsequently result in a further reduced average effort to deliver object to customers.

In another embodiment the contact information present in the database may comprise delivery times proposed by the customer. The effect is the same as discussed above with the advantage, that the most convenient delivery time is used to plan the most effective route for the courier service to deliver multiple objects to multiple customers.

The invention further relates to a portable reading unit for use in a delivery system delivering objects to customers according to present invention suitable to read a machine-readable information of a notification label, which links the object to contact information of the customer present in the database of a notification system, attached to an object to be delivered to the customer and to be connected to the database of the notification system wireless, where the reading of the machine-readable information provides a trigger to the notification system to send out a notification to the customer about the delivery time of the object within a range of less than 6 hours, preferably less than 3 hours, more preferred less than 2 hours, even more preferred 1 hour or less. In an embodiment the portable reading unit comprises a communication unit suitable to establish the wireless connection between the portable reading unit and the database by applying at least one element of the group comprising WLAN, RFID, radio communication, or cellular communication network, preferably a communication unit to establish a two-way communication between reading unit and database. A two-way communication is required in embodiments, where the portable reading unit comprises a notification unit to create the notification to be sent out after receiving the contact information of the customer from the database and/or where the portable reading unit comprises a sending unit suitable to send out the notification to the customer, preferably as SMS, telephone call, e-mail, or electronic calendar information. In these cases the contact information of the database is transferred to the reading unit after linking the object to the contact information of the customer via reading the notification label in order to send out the notification by the reading unit itself. In cases, where the notification is send out by other components of the notification system, there is no need for a two-way communication with the reading unit, because only the machine-readable information of the object is transferred to the notification system. The communication unit and sending unit present either in the reading unit or somewhere else in the notification system connected to the database of the notification system may be any suitable units to receive, process and transmit data, especially to create the format and content of the notification in case of the communication unit and to send-out the notification in case of the sending unit. In case of reading units sending out the notification to the customer, the reading unit may further comprise a display, where the notification is displayed before sending it out. The reading unit may further comprise a send button to be pressed to send out the notification after checking the content. It may further be advantageous to be able to edit and modified the displayed notification is case of recognized failures regarding the content of the notification. Such a reading unit has to be provided as a hand held computer and communication device as available in the market combined with a functionality enabling to read machine-readable information. As alternative embodiments, both devices may be connected together to build such a reading device. People skilled in the art will be able to provide suitable interfaces required to exchange data between hand held computer and communication devices and reading units (such as scanners) or between similar components within one device in the right format within the scope of the present invention.

The invention further relates to a method to operate a delivery system delivering objects to customers according to the present invention comprising the steps of
- attaching a notification label with machine-readable information to the object to link the object to contact information of the customer present in a database of a notification system,
- reading the machine-readable information with a portable reading device according to the present invention during route preparation for the delivering of objects,
- triggering the notification system by the reading device to send out a notification to the customer about the delivery time via a wireless connection established between the portable reading device and the database of the notification system wireless,
- sending out the notification to the customer about the delivery time of the object within a range of less than 6 hours, preferably less than 3 hours, more preferred less than 2 hours, even more preferred 1 hour or less, and
- delivering the object to the customer within the notified range.

The delivering denotes the process of successfully or non-successfully transporting the object to the address of the customer.

In an embodiment the method further comprises the steps of
- proposing at least one suitable delivery time made by the customer before sending out the notification, and
- sending out the notification according to the proposed delivery time of the object within a range of less than 6 hours, preferably less than 3 hours, more preferred less than 2 hours, even more preferred 1 hour or less.

In another embodiment the method further comprises the steps of
- requesting an update of the delivery time by the customer via replying of the customer to the notification,
- sending out an updated notification according to the updated delivery time of the object within a range of less than 6 hours, preferably less than 3 hours, more preferred less than 2 hours, even more preferred 1 hour or less, and
- delivering the object to the customer within the updated notified range. Updating denotes the exchange of the originally announced range (range of time for delivery) by another different notified range.

In another embodiment of the method, the step of sending out the notification to the customer comprises the steps of
- transmitting the contact information from the database to a communication unit of the reading unit, preferably comprising delivery times proposed by the customer,
- creating the notification within the reading unit by a notification unit of the reading unit, and
- sending out the notification by a sending unit of the reading unit.

### Brief description of the drawings

These and other aspects of the invention will be apparent from and elucidated with reference to the embodiments described hereinafter.
Fig.1: an embodiment of the delivery system according to the present invention.
Fig.2: schematic process flow of delivering objects according to the present invention.

### Detailed description of embodiments

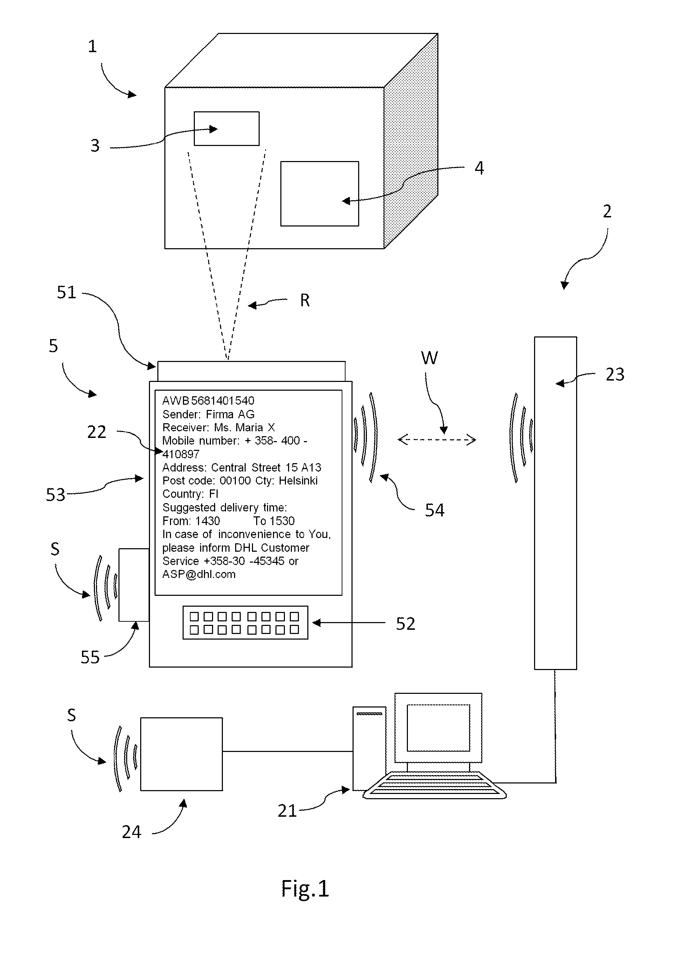

Fig.1 shows an embodiment of the delivery system according to the present invention, where the object 1 carries the notification label 3 separate from the mailing label 4. In other embodiments the notification label might be integrated into the mailing label 4. The notification label 3 attached to the outer surface of the object 1 comprises a machine-readable information not shown here. The portable reading device 5 is displayed as a hand-held scanner comprising a reading means 51 suitable to read the machine-readable information. The applied reading means 51 depend on the kind of machine-readable information of the notification label 3, e.g. a bar code scanner in case of a barcode to be read or a RFID receiver in case of a RFID coded information. The reading unit 5 is connected to the notification system 2 via a wireless connection W. The connection W is established between the communication unit 54 of the reading device and a corresponding communication unit 23 of the notification system 2, which is further connected to the database 21 comprising the contact information of the customer. The connection between the communication unit 23 and the database might be established by a computer cable or by another wireless connection. Alternatively, the database 21 is provided as a computer system, which itself comprises the communication unit 23. The wireless connection W is provided as a two-way communication connection, where the portable reading unit 5 sends the machine-readable information to the database 21 in order to link the contact information to the object with the attached notification label 3 and the contact information might be send to the reading unit 5 in order to create the notification 22 at the reading unit 5. Alternatively, the notification system 2, e.g. the database 21 provided as a computer system, creates the notification 22 and sends the created notification 22 to the reading unit 5 in order to send out S the notification 22 to the customer from a sending unit 55 of the reading unit 5. In other embodiments, the notification 22 might be send out S to the customer from a sending unit 24 as part of the notification system 2. In the shown embodiment, the reading unit 5 further comprises a notification unit 53 and a keyboard 52 in order to be able to edit, amend and send out the notification 22 from the reading unit on demand.

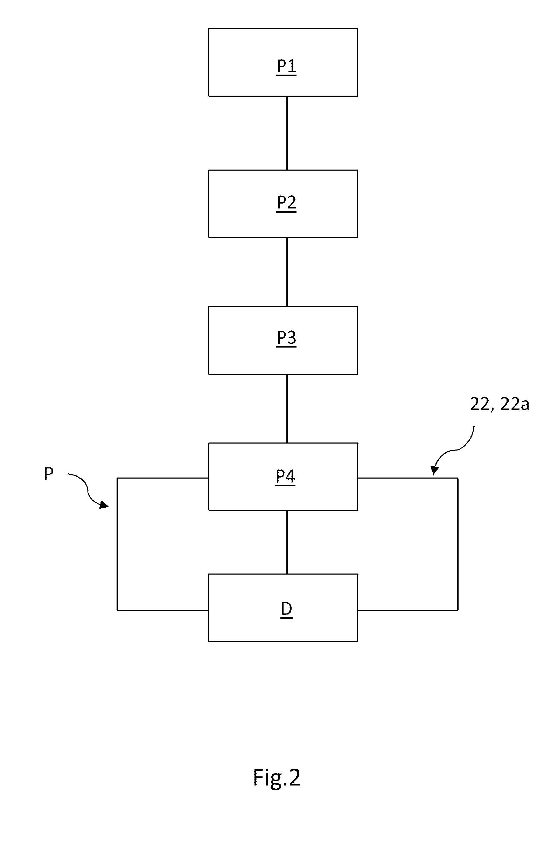

Fig.2 shows a schematic process flow of delivering objects according to the present invention, where the delivery process from dispatching of the object 1 by a sender to the delivery of the object 1 to the customer is divided into process phases P1 to P4 and D. At P1, the object is dispatched and the shipping company may receive contact information about the customer from the sender. During P2 the object 1 enters a logistic terminal, where the notification label 3 is attached to the object 1. The contact information provided by within P1 is stored and processed in a database. With attached notification label, the link to the contact information is established. The logistic terminal might be located in the sending country (country, where the object is dispatched). In case of logistic terminal located in sending countries, where no notification labels can be attached or where no contact information can be stored and/or processed in a way further provided along the remaining logistic chain, the object 1 is inspected in the subsequent logistic terminals located for instance in the receiving country (country, where the customer address is located) during P3. In case of receiving objects without attached notification labels 3, the logistic terminal may provide or find appropriate contact information or receives contact information from the delivery service of phase P1 and subsequently attach the notification label 3 to the object now linked to the contact information stored and processed in the logistic terminal of the receiving country. In P4, the delivering service reads the notification label 3 and the connected notification system 2 sends out the notification 22 to the customer comprising an announcement of the delivery time of the object 1. The customer receives the notification 22 and is able to either accept the announced delivery time or to reply the notification 22 proposing P another delivery time convenient to the customer. In case of a proposed P new delivery time, the notification system 2 sends out another notification 22a updated with the delivery time proposed by the customer, if this delivery time is executable for the delivering service. After a successful delivery of the object, the delivery process is completed.

While the invention has been illustrated and described in details in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference sign in the claims should not be construed as limiting the scope.

### List of reference numerals

- 1: object to be delivered
- 2: notification system
- 21: database (or computer system) of the notification system
- 22: notification
- 22a: updated notification
- 23: receiving station of the notification system
- 24: sending unit of the notification system
- 3: notification label
- 4: mailing label
- 5: portable reading unit, e.g. a scanner
- 51: reading means
- 52: keyboard to send-out / amend the notification
- 53: notification unit of the reading unit
- 54: communication unit of the reading unit
- 55: sending unit of the reading unit
- R: reading of the machine-readable information of the notification label
- W: wireless connection between reading unit and database of the notification system
- S: sending out the notification
- P: proposing a delivery time by the customer
- P1: phase 1 within the delivery of the object
- P2: phase 1 within the delivery of the object
- P3: phase 1 within the delivery of the object
- P4: phase 1 within the delivery of the object
- D: delivering the object to the customer

## Claims

1. A delivery system delivering objects (1) to customers comprising a notification system (2) to notify the customer about a delivery time of the object (1) with a database (21) comprising contact information about the customer, a notification label (3) with machine-readable information attached to the object (1) to link the object (1) to the contact information of the customer present in the database (21), wherein the notification system (2) further comprises portable reading units (5) suitable to read (R) the machine-readable information of the notification label (3) and to be connected to the database (21) of the notification system (2) wireless (W), where the reading (R) of the machine-readable information provides a trigger to the notification system (2) to send out (S) a notification (22) to the customer about the delivery time of the object (1) within a range of less than 6 hours, preferably less than 3 hours, more preferred less than 2 hours, even more preferred 1 hour or less.

2. The delivery system according to claim 1, **characterized in that** the notification label (3) is part of a mailing label (4).

3. The delivery system according to claim 1 or 2, **characterized in that** the machine-readable information is a one or two dimensional barcode or provided by an RFID chip.

4. The delivery system according to one of the preceding claims, **characterized in that** the notification system (2) is suitable to receive a reply of the customer to the notification (22) about the delivery time, preferably to update the delivery time, or to receive a proposal (P) of at least one suitable delivery time made by the customer before sending out (S) the notification (22).

5. The delivery system according to one of the preceding claims, **characterized in that** the wireless connection (W) between the portable reading unit (5) and the database (21) is established by applying at least one element of the group comprising WLAN, RFID, radio communication, or cellular communication network.

6. The delivery system according to one of the preceding claims, **characterized in that** the notification (22) is sent out (S) as SMS, telephone call, e-mail, or electronic calendar information.

7. The delivery system according to one of the preceding claims, **characterized in that** the contact information present in the database (21) may comprise delivery times proposed (P) by the customer.

8. A portable reading unit (5) for use in a delivery system delivering objects (1) to customers according to claim 1 suitable to read a machine-readable information of a notification label (3), which links the object (1) to contact information of the customer present in the database (21) of a notification system (2), attached to an object (1) to be delivered to the customer and to be connected to the database (21) of the notification system (2) wireless (W), where the reading (R) of the machine-readable information provides a trigger to the notification system (2) to send out (S) a notification (22) to the customer about the delivery time of the object (1) within a range of less than 6 hours, preferably less than 3 hours, more preferred less than 2 hours, even more preferred 1 hour or less.

9. The portable reading unit (5) according to claim 8, **characterized in that** the portable reading unit (5) comprises a communication unit (54) suitable to establish the wireless connection (W) between the portable reading unit (5) and the database (21) by applying at least one element of the group comprising WLAN, RFID, radio communication, or cellular communication network, preferably a communication unit to establish a two-way communication between reading unit (5) and database (21).

10. The portable reading unit (5) according to claim 9, **characterized in that** the portable reading unit (5) comprises a notification unit (53) to create the notification (22) to be sent out (S) after receiving the contact information of the customer from the database (21).

11. The portable reading unit according to claim 9 or 10, **characterized in that** the portable reading unit comprises a sending unit suitable to send out the notification to the customer, preferably as SMS, telephone call, e-mail, or electronic calendar information.

12. A method to operate a delivery system delivering objects (1) to customers according to claim 1 comprising the steps of
- attaching a notification label (3) with machine-readable information to the object (1) to link the object (1) to contact information of the customer present in a database (21) of a notification system (2),
- reading (R) the machine-readable information with a portable reading device (5) according to claim 8 during route preparation for the delivering of objects (1),
- triggering the notification system (2) by the reading (R) to send out (S) a notification (22) to the customer about the delivery time via a wireless connection (W) established between the portable reading device (5) and the database (21) of the notification system (2) wireless,
- sending out (S) the notification (22) to the customer about the delivery time of the object (1) within a range of less than 6 hours, preferably less than 3 hours, more preferred less than 2 hours, even more preferred 1 hour or less, and
- delivering the object (1) to the customer within the notified range.

13. The method according to claim 12, further comprising the steps of
- proposing (P) at least one suitable delivery time made by the customer before sending out (S) the notification (22), and
- sending out (S) the notification (22) according to the proposed (P) delivery time of the object (1) within a range of less than 6 hours, preferably less than 3 hours, more preferred less than 2 hours, even more preferred 1 hour or less.

14. The method according to claim 12 or 13, further comprising the steps of
- requesting (P) an update of the delivery time by the customer via replying of the customer to the notification (22),
- sending out (S) an updated notification (22a) according to the updated delivery time of the object (1) within a range of less than 6 hours, preferably less than 3 hours, more preferred less than 2 hours, even more preferred 1 hour or less, and
- delivering the object (1) to the customer within the updated notified range.

15. The method according to claim 12 to 14, **characterized in that** the step of sending out (S) the notification (22) to the customer comprises the steps of
- transmitting the contact information from the database (21) to a communication unit (54) of the reading unit (5), preferably comprising delivery times proposed by the customer,
- creating the notification (22) within the reading unit (5) by a notification unit (53) of the reading unit (5), and
- sending out (S) the notification (22) by a sending unit (55) of the reading unit.
